Europäisches Patentamt

European Patent Office

Office européen des brevets

(19)

(11) Veröffentlichungsnummer : **0 144 973**
**B1**

(12) # EUROPÄISCHE PATENTSCHRIFT

(45) Veröffentlichungstag der Patentschrift :
02.12.87

(21) Anmeldenummer : 84114811.7

(22) Anmeldetag : 05.12.84

(51) Int. Cl.⁴ : **A 47 J 37/12**

(54) **Friteuse.**

(30) Priorität : 12.12.83 CH 6617/83

(43) Veröffentlichungstag der Anmeldung :
19.06.85 Patentblatt 85/25

(45) Bekanntmachung des Hinweises auf die Patenter-
teilung : 02.12.87 Patentblatt 87/49

(84) Benannte Vertragsstaaten :
AT BE CH DE FR GB IT LI LU NL SE

(56) Entgegenhaltungen :
FR-A- 2 244 436
FR-A- 2 504 001
GB-A-    379 913
US-A- 2 452 472
US-A- 3 217 633
US-A- 3 640 208
US-A- 4 102 330

(73) Patentinhaber : NIRO PLAN AG
Baarerstrasse 59
CH-6300 Zug (CH)

(72) Erfinder : Schwizer, Anton
Moosacker
CH-6264 Pfaffnau (CH)

(74) Vertreter : Troesch, Hans Alfred, Dr. Ing. et al
Walchestrasse 19
CH-8035 Zürich (CH)

## Beschreibung

Die vorliegende Erfindung betrifft eine Friteuse mit obenliegendem Oeltrog, untenliegender Heizquelle und dazwischen liegendem Wärmetauscher für den Wärmeaustausch zwischen einem gasförmigen Wärmeträger und dem Fritieröl, wobei die Oelzirkulation thermosiphonisch erfolgt und je ein Gebläseläufer in der Rauchgasabfuhr und der Frischluftzufuhr angeordnet ist.

Friteusen dieser Bauart sind bekannt. Die DE-A-2 443 156 beschreibt ein Verfahren zum Braten von Lebensmittels und eine Friteuse zur Durchführung des bekannt gewordenen Verfahrens, wobei, wie üblich, das Fritieröl auf direkte Art erhitzt wird. Die Prozesswärme wird dabei von der Wärmequelle mittels Lamellen oder ähnlichen heizflächenvergrössernden Vorkehrungen über die Oelbehälterwände in das Oel gebracht. Dieses bekannte Verfahren und die Friteuse, welche auf diesem Verfahren beruht, können aber nicht in allen Teilen befriedigen, da sie insbesondere die zugeführte Wärme schlecht verwerten. Dabei können örtliche Ueberhitzungen auftreten (z. B. auch US-A 2 452 472).

Es wurde versucht, diesen Nachteil der schlechten Wärmeverwertung aus dem gasförmigen Wärmeträger und örtliche Ueberhitzungen des Fritieröls durch Einbau eines Ventilators, sei dies für das Absaugen (US-A-4 102 330), sei es als Frischluftpropeller (US-A-2 452 472, FR-A-2 504 001) zu beheben. Bei dieser letzterwähnten Ausführung handelt es sich um ein völlig anderes Prinzip der Wärmeabgabe, indem die Brenngase durch perforierte Keramikplatten strömen — was hohe Reibungsverluste mit sich bringt — um die Platten so zu erhitzen, dass sie ihre Wärme im wesentlichen durch Strahlung und nicht durch natürliche oder erzwungene Konvektion abgeben. Bei diesen hohen Strahlungstemperaturen besteht eine grosse Gefahr örtlicher Ueberhitzung, ein Negativum, welches die vorliegende Erfindung zu eliminieren trachtet.

Bei einer besonderen Bauart einer Friteuse wird rauchgasseitig ein Saugventilator vorgesehen und zudem ein Saugventilator für das Absaugen entstehender Oeldämpfe längs den oberen Rändern der Friteuse. Einfachheitshalber sind die beiden Läufer der Ventilatoren auf einer gemeinsamen Welle angeordnet und von ein und demselben Motor angetrieben. Da der eine Läufer nur dem Absaugen der Brüdendämpfe dient, bringt diese Lösung (US-A-3 640 208) nicht mehr zum Stande der Technik, als die vorerwähnten Vorveröffentlichungen. Zudem weist diese Ausführung den Nachteil auf, dass die Wärmeträgergase durch zueinander parallelgeschaltete Rohre strömen und in einem Kollektor an distanzmässig sehr unterschiedlichen Orten und Abständen vom Saugventilator münden. Dies bringt bekanntlich örtlich wesentliche Gasgeschwindigkeiten mit sich, was wiederum zu unterschiedlichen Wärmeübergangszahlen führt und somit örtliche Ueberhitzungen des Fritieröls bewirken kann.

Durch die GB-A 379 913 ist ferner eine Friteuse gemäß Oberbegriff des Anspruches 1 mit obenliegendem Oeltrog, untenliegender Heizquelle und dazwischenliegendem Wärmetauscher, welcher den Oeltrog darstellt, für den Wärmeaustausch zwischen einem gasförmigen Wärmeträger und dem Fritieroel bekannt geworden. Die Oelzirkulation erfolgt thermosiphonisch. Diese Friteuse weist ein Rauchgasgebläse auf. Diese bekannte Friteuse weist ein Gebläse in der Rauchgasabfuhr und ein Gebläse in der Frischluftzufuhr auf.

Die vorliegende Erfindung bezweckt daher die Schaffung einer Friteuse, welche die zugeführte Wärme bedeutend besser ausnützt und welche versucht, bei grossen Energiedichten bezüglich des Oelvolumens geringe, gleichmässige, spezifische Heizflächenbelastungen zu erhalten und damit bessere Beziehungen zu schaffen.

Eine derartige erfindungsgemässe Friteuse zeichnet sich dadurch aus, dass die die beiden Wärmetauschmedien trennende Wand im Querschnitt rechteckimpulsförmig ausgebildet ist, dass ein obenliegender Korb angeordnet ist und dass im Gasteil des Wärmetauschers wärmeübertragende Zusatzflächen angeordnet sind und diese aus einander gegenüberliegenden, mit je einem Schenkel ineinandergreifenden U- oder L-Profilen gebildet sind, wobei alle sich folgenden Schenkel gleichen Abstand voneinander aufweisen.

Das Anbringen je eines Gebläses für Frischluft und Rauchgase gestattet ein einfaches Optimieren der gasseitigen statischen und dynamischen Drücke in der Friteuse und ermöglicht es auch, die Temperaturen zu halten und diese nicht örtlich unkontrolliert durch eingesaugte Falschluft abzusenken, bzw. bei Ueberdruck durch Leckstellen Rauchgase in den Friteuse-Bedienungsraum auszustossen oder bei Gasheizung ein Ausgehen der Flamme zu riskieren.

Besondere Ausführungsarten der Erfindung sind in den abhängigen Ansprüchen 2 und 3 aufgeführt.

Ein Ausführungsbeispiel des Erfindungsgegenstandes wird anschliessend anhand einer Figur erläutert.

Es zeigen:

Figur 1 einen Blick ins Innere einer sog. Duplex-Friteuse, im wesentlichen geschnitten nach Schnittlinie I-I der Fig. 3 bzw. in einem Teil gemäss zusätzlicher Schnittlinie Ia-Ia der Fig. 4,

Figur 2 eine Aufsicht der Friteuse gemäss Fig. 1, mit weggehobenem Fritierkorb,

Figur 3 einen Schnitt durch die Duplex-Friteuse gemäss den Fig. 1 und 2, im wesentlichen nach Schnittlinie II-II der Fig. 1 und 4,

Figur 4 einen Ausschnitt aus dem Wärmetauscher im Querschnitt, im wesentlichen gemäss Schnittlinie IV-IV der Fig. 1.

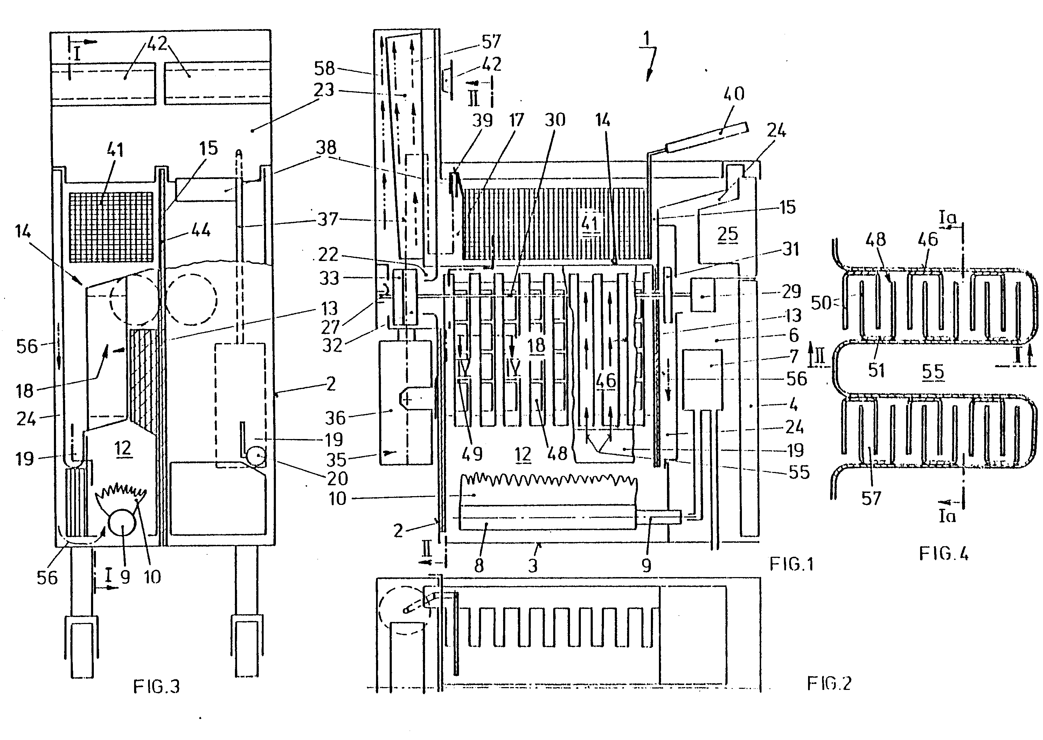

Die in den Fig. 1 bis 4 dargestellte Friteuse 1 hat ein Gehäuse 2, mit einem Unterbau 3 und einer Tür 4. Das Gehäuse 2 begrenzt einen Innen-

raum 6, welcher der Aufnahme einer Gas-Automatenstation 7 zwecks Versorgung eines Gasbrenners 8 mit Brenngas dient. Der Gasbrenner 8 besteht im wesentlichen aus einem gelochten Gasrohr 9. In Betrieb entsteht eine Flamme 10. Der Gasbrenner 8 befindet sich in einer Brennkammer 12, in deren oberem Teil ein Wärmetauscher 13 eingebaut ist. Dieser bildet Teil eines Oeltroges 14, dessen Oberteil mit 15 bezeichnet ist. Der Oberteil 15 legt den eigentlichen Fritiertrog 17 fest, während der Mittelteil 18 des Oeltroges 14 im wesentlichen aus dem Wärmetauscher 13 gebildet wird. Der unterste Teil des Oeltroges 14 ist als Oelsumpf 19 ausgebildet. Er ist an seiner tiefsten Stelle mit einem Ablasshahn 20 versehen.

Aus der Brennkammer 12 führt ein Rauchgaskanal 22 in einen Kamin 23. Die Verbrennungsluft wird durch Verbrennungsluftkanäle 24 einströmen. In diesem Bereich ist, wie aus Fig. 1 ersichtlich, ebenfalls ein elektronisches Modul als Mess- und Regeleinrichtung zur Steuerung 25 der Friteuse 1 eingebaut. Auf der Gegenseite befindet sich ein Kühlluftkanal 27.

Unterhalb der elektronischen Steuerung 25 ist ein Gebläse-Antriebs-Elektromotor 29 mit einer durchgehenden Welle 30 vorgesehen. Diese ist Träger eines Läufers 31 für die Förderung von Verbrennungsluft sowie, auf der anderen Seite der Friteuse 1 eines Läufers 32 für die Förderung der Rauchgase und eines weitern, daneben angeordneten Läufers 33 für die Förderung der Kühlluft.

Unterhalb des Kamins 23 befindet sich ein Hubautomat 35 mit einem Antrieb 36 und einem Hubgestänge 37, welches in einem Korbhalter 38 endet. Ein Aufhänger 39, am Fritierkorb 41 befestigt, dient der Halterung des Korbes 41 in seiner abgesenkten Fritierlage. Ein Handgriff 40 erlaubt das Ergreifen des Korbes. Im oberen Bereich des Kamins 23 ist eine Fritierkorbaufhängung 42 vorgesehen, an welcher, mittels des Aufhängers 39, der Fritierkorb vor bzw. nach dem Fritieren aufgehängt werden kann.

Wie aus Fig. 3 ersichtlich, handelt es sich bei der beschriebenen Friteuse um eine sog. Duplex-Ausführung, bei welcher eine Trog-Trennwand 44 vorgesehen ist. Diese teilt die Friteuse 1 in Längsrichtung in zwei spiegelbildlich gleiche Ausführungen. Jeder Teil weist somit die vorgehend beschriebenen Elemente auf, welche unabhängig voneinander, einzeln oder synchron miteinander betrieben werden können.

Wie Fig. 4 zeigt, besteht der Wärmetauscher zwischen dem Fritieröl und den Rauchgasen aus einer rechteckimpulsförmig gebogenen Blechwand 46, in welche auf der Rauchgasseite U-förmige Profile 48 an deren Basis 51 eingeschweisst sind. Diese Profile 48 sind durch Querschlitze 49 unterteilt. Die Schenkel greifen abwechslungsweise ineinander. Deren gegenseitiger Abstand ist, wie Fig. 4 zeigt, gleichmässig.

Anstelle von U-Profilen können auch L-Profile verwendet werden.

Die ausgezogenen Pfeile 55 zeigen den Weg und die Strömung des Fritieröls an, während die strichpunktierten Pfeile 56 die Frischluftwege wiedergeben. Die Rauchgase sind durch Pfeile 57 in gestrichelter Form dargestellt, während die Kühlluft durch Pfeile 58, gezeichnet durch einen Strich und drei Punkte, die Strömung dieser Kühlluft anzeigen.

Es ist natürlich auch möglich, anstelle einer Gasheizung eine elektrische Heizung in der Brennkammer 12 vorzusehen, welche Kammer 12 dann als Erhitzungskammer bezeichnet werden kann. Die elektrisch erhitzte Luft folgt dann den Wegen der in den Fig. dargestellten Rauchgase.

Es ist ferner möglich, je nach Umständen einen der Läufer 31 bis 33 wegzulassen.

Der Kamin kann verstellbar sein, was ermöglicht, das Mischungsverhältnis Abgas/Kühlluft zu ändern.

Bezüglich Wirkungsgraderhöhung haben sich nicht nur die eingebauten Gebläse bestens bewährt, sondern sie erlauben auch, zusammen mit der Ausführung des Wärmetauschers in der dargestellten Weise eine grosse Energiedichte in der Grössenordnung von 1 kW/1 Oel, sowie eine geringe spezifische Heizflächenbelastung in der Grösse von 3 W/cm² Wärmeaustauschfläche.

Ein relativ kleines Oelvolumen erlaubt ferner einen sparsamen Betrieb, wobei, bedingt durch die gute Oelzirkulation und die guten Wärmeübergangsverhältnisse, auch auf Seiten der Rauchgase bzw. der aufgeheizten Luft. Sie verhindern lokale Ueberhitzungen und somit eine vorzeitige Zersetzung des Backöls. Daduch wird eine gleichbleibende Qualität der fritierten Ware über längere Zeit mit der gleichen Oelfüllung erreicht. Sie sichern kleine Verbrennungsgefahren für das Oel und daher immer beste Qualität der fritierten Ware.

**Patentansprüche**

1. Friteuse mit obenliegendem Oeltrog (14), untenliegender Heizquelle (8) und dazwischen liegendem Wärmetauscher (13) für den Wärmeaustausch zwischen einem gasförmigen Wärmeträger (57) und dem Fritieröl (55), wobei die Oelzirkulation thermosiphonisch erfolgt und je ein Gebläseläufer (32, 31) in der Rauchgasabfuhr (57) und der Frischluftzufuhr (56) angeordnet ist, dadurch gekennzeichnet, dass die die beiden Wärmetauschmedien (55, 57) trennende Wand (46) im Querschnitt rechteckimpulsförmig ausgebildet ist, dass ein obenliegender Korb (41) angeordnet ist und dass im Gasteil des Wärmetauschers (13) wärmeübertragende Zusatzflächen (48) angeordnet sind und diese aus einander gegenüberliegenden, mit je einem Schenkel (50) ineinandergreifenden U- oder L-Profilen (48) gebildet sind, wobei alle sich folgenden Schenkel (50) gleichen Abstand voneinander aufweisen.

2. Friteuse nach Anspruch 1, dadurch gekennzeichnet, dass der Wärmetauscher (13) zentral und im wesentlichen vertikal bzw. leicht davon abweichend angeordnet ist, um das aufsteigende Oel zu erwärmen, und dass er mindestens auf einer Seite von einem einbautenfreien plattenförmigen Raum (19) begrenzt ist, welcher der Abwärtsführung des kälteren Oels dient.

3. Friteuse nach Anspruch 1, dadurch gekennzeichnet, dass die U-Profile quergeschlitzt sind.

## Claims

1. Fryer with an upper oil vat (14), a lower heat source (8), and an intermediately disposed heat exchanger (13) for heat exchange between a gaseous heating medium (57) and the frying oil (55), wherein oil circulation is thermo-siphonically effected and a rotary blower (32, 31) is disposed in both the flame outlet channel (57) and the fresh air feed channel (56), characterised in that the wall (46) separating the two heat exchange media (55, 57) is shaped in cross-section like a rectangular pulse, in that an upper basket (41) is provided, and in that the gas-carrying section of the heat exchanger (13) includes auxiliary heat-transfer surfaces (48) comprising the limbs (50) of interengaging and oppositely disposed H- and/or L-profiles, wherein all successive limbs (50) are at the same distance from each other.

2. Fryer as in Claim 1, characterised in that the heat exchanger (13) is disposed centrally and is substantially vertical or slightly deviating from the vertical in order to heat the rising oil, and in that on at least one side it is bounded by a plate-shaped space (19) free of inserts and used for downward guidance of the colder oil.

3. Fryer as in Claim 1, characterised in that the U-profiles are transversely slotted.

## Revendications

1. Friteuse comportant un bac à huile (14) situé à la partie supérieure, une source de chauffage (8) située à la partie inférieure et un échangeur de chaleur (13) situé entre eux en vue d'un échange thermique entre un gaz caloporteur (57) et l'huile de friture (55), la circulation d'huile s'effectuant par thermosiphon et un ventilateur (32, 31) étant disposé respectivement dans l'évacuation des fumées (57) et dans l'arrivée d'air frais (56), caractérisée en ce que la paroi (46) séparant les deux fluides en relation d'échange thermique (55, 57) se présente, en section transversale, sous la forme de créneaux rectangulaires, en ce qu'un panier (41) est disposé à la partie supérieure et en ce que des surfaces additionnelles (48) de transfert thermique sont ménagées dans la zone de circulation du gaz de l'échangeur de chaleur (13) et ces surfaces additionnelles sont formées par des profilés en U ou en L (48) qui sont placés en vis-à-vis et s'interpénètrent à chaque fois par une branche (50), toutes les branches successives (50) étant espacées les unes des autres de la même distance.

2. Friteuse selon la revendication 1, caractérisée en ce que l'échangeur de chaleur (13) est disposé au centre et à peu près verticalement ou selon une légère inclinaison par rapport à la verticale, pour chauffer l'huile montante, et en ce qu'il est délimité, tout au moins sur un côté, par une enceinte (19) en forme de plaque sans aucun aménagement, qui sert à guider vers le bas l'huile refroidie.

3. Friteuse selon la revendication 1, caractérisée en ce que les profilés en U présentent des fentes transversales.

0 144 973

FIG.1

FIG.2

FIG.3

FIG.4

1